# EUROPÄISCHE PATENTANMELDUNG

(11) **EP 3 225 971 A1**
(43) Veröffentlichungstag der Anmeldung: **04.10.2017**
(21) Anmeldenummer: 17000358.6
(22) Anmeldetag: 07.03.2017
(51) Int. Cl.: G01N 15/06

(54) **VORRICHTUNG UND VERFAHREN ZUM BESTIMMEN EINER KONZENTRATION ZUMINDEST EINES STOFFES IN EINEM FLÜSSIGEN MEDIUM**

(30) Priorität: 30.03.2016 DE 102016003843
(71) Anmelder: Hein, Jörg-Helge, 15738 Zeuthen (DE); Nillert, Peter, 15754 Heidesee (DE)
(72) Erfinder: Hein, Jörg-Helge, 15738 Zeuthen (DE); Nillert, Peter, 15754 Heidesee (DE)
(74) Vertreter: Dammertz, Ulrich

(57) **Zusammenfassung**

Die Erfindung betrifft eine Vorrichtung (10) und ein Verfahren zum Bestimmen einer Konzentration zumindest eines Stoffes in einem flüssigen Medium, vorzugsweise Wasser, umfassend ein Trägermaterial (12) mit einer Oberfläche (14), die für den zumindest einen Stoff akkumulationsfähig ist, derart, dass der Stoff an der Oberfläche (14) des Trägermaterials (12) akkumulierbar ist, wenn das flüssige Medium an dem Trägermaterial (12) vorbeiströmt oder das Trägermaterial (12) durchströmt. Die Vorrichtung (10) umfasst ein Gehäuse (16) mit einer Durchfluss-Messkammer (18), an der ein Einlass (20) und ein Auslass (22) für das flüssige Medium vorgesehen sind, so dass die Messkammer (18) von dem flüssigen Medium durchströmbar ist, wobei das Trägermaterial (12) innerhalb der Messkammer (18) angeordnet ist, derart, dass sich innerhalb der Messkammer (18) im Bereich des Trägermaterials (12) ein vorbestimmter Strömungsquerschnitt (24) orthogonal zur Strömungsrichtung (26) des flüssigen Mediums bildet. Des Weiteren umfasst die Vorrichtung (10) Mittel (28) zum Einstellen und Messen eines vorbestimmten Volumenstroms, mit dem die Messkammer (18) von dem flüssigen Medium durchströmt werden kann.

## Beschreibung

Die Erfindung betrifft eine Vorrichtung zum Bestimmen einer Konzentration zumindest eines Stoffes in einem flüssigen Medium nach dem Oberbegriff von Anspruch 1, und ein entsprechendes Verfahren, wobei das Verfahren die Bestimmung einer Kalibierfunktion für die Konzentration eines Stoffes in einem flüssigen Medium beinhaltet.

Zur Überwachung der Beschaffenheit von Grund- und Oberflächenwasser ist nach dem Stand der Technik der Einsatz einer Passivsammler-Messzelle bekannt, bei der es sich um eine Messeinrichtung zur Qualifizierung der passiven Probennahme handelt. Hiermit kann festgestellt werden, ob bestimmte Stoffe im Wasser vorkommen bzw. enthalten sind, oder nicht. Passivsammler sind im weitesten Sinne Trägermaterialien, wie z. B. perforiertes Papier oder Holzspäne oder Holzwolle, die derartig chemisch vorbereitet sind, dass sie aus dem an ihrer Oberfläche vorbeiströmenden Wasser je nach ihrer Auswahl und Bestimmung bestimmte Stoffe herausfiltrieren und an ihrer Oberfläche akkumulieren können.

Ein Passivsammler wird in der Praxis eingesetzt, wenn die gesuchten Stoffe in Wasser bzw. flüssigen Medien in schwankenden Konzentrationen bzw. sporadisch auftreten, oder wenn diese Stoffe in so geringen Konzentrationen auftreten, dass diese in der einfachen Wasserprobe nicht detektiert werden können. Im letzteren Fall wird nur durch Sammeln der im Wasser in geringsten Konzentrationen vorhandenen Stoffe über einen längeren Zeitraum eine genügend große Menge der Stoffe auf dem Passivsammler erreicht, die analytisch messbar ist. Das ist z. B. insbesondere dann von Interesse, wenn besagte Stoffe humantoxisch wirken und sich im menschlichen Gewebe akkumulieren können. Bekannt sind Passivsammler zur Untersuchung von Metalloiden wie Arsen, Antimon, und Selen, Schwermetalle wie z. B. Blei, Kupfer, Nickel, Quecksilber, Chrom und Aluminium, Actiniden wie Uran und Thorium sowie auch organischen Substanzen wie z. B. Nitroaromaten, BTEX-Aromaten, Kohlenwasserstoffe und aromatische Amine.

Sofern bei bislang gebräuchlichen Passivsammlern Einhausungen oder Aufnahmevorrichtungen vorgesehen sind, dienen diese lediglich zu dem Zweck, den Passivsammler bzw. das entsprechende Trägermaterial während des Messeinsatzes zu fixieren und ggf. vor mechanischer Zerstörung zu schützen.

Passivsammler ermöglichen eine gezielte Erfassung von Wasserinhaltsstoffen, ohne eine Wasserprobe zu entnehmen. Die gesuchten Wasserinhaltsstoffe werden an der Oberfläche der Passivsammler aufgenommen bzw. akkumuliert und kumulativ an bzw. in das Material eingelagert. Nach dem Messeinsatz, der je nach Aufgabenstellung Tage, Wochen oder Monate dauern kann, werden die kumulierten Wasserinhaltsstoffe durch Extraktion vollständig oder in Teilen vom Passivsammler zurückgewonnen und laboranalytisch bestimmt. In dieser Weise kann dann eine qualitative Aussage darüber gewonnen werden, ob der gesuchte Stoff in dem Wasser enthalten ist. Nachteilig hierbei ist jedoch die Tatsache, dass lediglich eine qualitative Feststellung darüber möglich ist, ob ein gesuchter Stoff in Wasser bzw. einem flüssigen Medium enthalten ist oder nicht, wobei weitergehende bzw. genauere Aussagen bezüglich einer Konzentration des Stoffes mit bislang gebräuchlichen Passivsammlern nicht möglich sind.

Aus WO 2011/046581 A1 sind ein System und ein Verfahren zur Analyse von Quecksilber in einem flüssigen Medium bekannt. Hierbei wird das flüssige Medium durch eine Reihenschaltung von insgesamt drei Filterbehälter geleitet, in denen jeweils ein Filtermedium enthalten ist, durch welches das flüssige Medium radial von außen nach innen geleitet wird. Diesbezüglich ist von Bedeutung, welche Menge an Quecksilber an bzw. in den Filtermedien der jeweiligen Filterbehälter abgeschieden wird. Ein genauer Strömungsquerschnitt in den Filterbehältern, nämlich orthogonal zur Strömungsrichtung des flüssigen Mediums, ist nicht bekannt.

Aus WO 2003/104795 A1 ist ein Verfahren bekannt, mit dem die Menge an Quecksilber in einem flüssigen Medium bestimmt werden kann. Bei der Durchführung des Verfahrens wird eine Kalibrierung vorgenommen, bei der dem zu untersuchenden flüssigen Medium Chlorwasserstoff (HCl) zugegeben wird.

Aus US 4 500 432 A und US 2009/0 249 958 A1 sind jeweils Vorrichtungen zum Bestimmen einer Konzentration zumindest eines Stoffes in einem flüssigen Medium nach dem Oberbegriff von Anspruch 1 bekannt.

Entsprechend liegt der Erfindung die Aufgabe zugrunde, die Messung bzw. Bestimmung einer Konzentration eines Stoffs in Wasser bzw. flüssigen Medien dahingehend zu optimieren, dass auch quantitative Aussagen bezüglich einer Konzentration von zumindest einem Stoff, der in Wasser bzw. einem flüssigen Medium enthalten ist, gewährleistet sind.

Diese Aufgabe wird durch eine Vorrichtung mit den im Anspruch 1 angegebenen Merkmalen, und durch ein Verfahren gemäß Anspruch 13 gelöst. Vorteilhafte Weiterbildungen der Vorrichtung sind in den abhängigen Ansprüchen definiert.

Eine erfindungsgemäße Vorrichtung dient zum Bestimmen einer Konzentration zumindest eines Stoffes in einem flüssigen Medium, vorzugsweise Wasser, und umfasst ein Trägermaterial mit einer Oberfläche, die für den zumindest einen Stoff akkumulationsfähig ist, derart, dass der Stoff an der Oberfläche des Trägermaterials akkumuliert werden kann, wenn das flüssige Medium an dem Trägermaterial vorbeiströmt oder das Trägermaterial durchströmt. Des Weiteren umfasst die Vorrichtung ein Gehäuse mit einer Durchfluss-Messkammer, an der ein Einlass und ein Auslass für das flüssige Medium vorgesehen sind. Entsprechend kann die Messkammer von dem flüssigen Medium durchströmt werden. Das Trägermaterial ist innerhalb der Messkammer angeordnet, derart, dass sich innerhalb der Messkammer im Bereich des Trägermaterials ein vorbestimmter Strömungsquerschnitt orthogonal zur Strömungsrichtung des flüssigen Mediums bildet. Des Weiteren umfasst die Vorrichtung Mittel zum Einstellen und Messen eines vorbestimmten Volumenstroms, mit dem die Messkammer von dem flüssigen Medium durchströmt wird, und Speichermittel, mit denen die Daten bezüglich der Menge an flüssigem Medium bzw. von Wasser, welche Menge die Messkammer durchströmt hat, gespeichert werden können, wobei diese Speichermittel in das Gehäuse der Vorrichtung integriert sind. Unter Berücksichtigung dieser Daten kann dann bei einer laboranalytischen Auswertung der Stoffmenge, die an der Oberfläche des Trägermaterials akkumuliert worden ist, ein Rückschluss auf die Menge an flüssigem Medium bzw. Wasser gezogen werden, die in einem bestimmten Messzeitraum die Messkammer der Vorrichtung durchströmt hat und kausal zu dieser Stoffmenge geführt hat. Die Vorrichtung umfasst auch eine Energieversorgung, an welche die Mittel zum Einstellen/Messen eines vorbestimmten Volumenstroms und die Speichermittel angeschlossen sind, wobei die Energieversorgung in das Gehäuse der Vorrichtung integriert ist und in Form von Batterien oder Akkumulatoren ausgebildet ist.

Der vorliegenden Erfindung liegt die wesentliche Erkenntnis zugrunde, dass es wegen des vorbestimmten Strömungsquerschnitts, der innerhalb der Messkammer im Bereich des Trägermaterials gebildet ist, und wegen der Mittel zum Einstellen eines vorbestimmten Volumenstroms für das flüssige Medium gewährleistet ist, gewünschte Strömungsbedingungen an einer Oberfläche eines Trägermaterials gezielt einzustellen. Die messtechnische Erfassung des Volumenstroms, mit dem die Messkammer von dem flüssigen Medium durchströmt wird bzw. durchströmt worden ist, erlaubt anschließend, und unter Berücksichtigung der im Messzeitraum an der Oberfläche des Trägermaterials akkumulierten Menge des gesuchten Stoffs, eine Rückrechnung auf die Stoffmenge dieses Stoffs in dem flüssigen Medium. Anders ausgedrückt, gestattet die Erfindung eine quantitative Beurteilung der Beschaffenheit von Wasser bzw. eines flüssigen Mediums in einem Messzeitraum, nämlich in Bezug auf eine darin enthaltene Stoffmenge zumindest eines gesuchten Stoffes, oder ggf. auch eines Gemisches bestehend aus mehreren Stoffen.

In Bezug auf den Nachweis eines Gemisches, das aus mehreren gesuchten Stoffen bestehen kann, versteht sich, dass für diesen Fall eine Oberfläche des hierzu eingesetzten Trägermaterials geeignet auf ein solches Stoffgemisch abgestimmt bzw. eingestellt ist.

An dieser Stelle darf darauf hingewiesen werden, dass die Erfindung ausschließlich auf eine Messung der Konzentration bzw. der Menge eines Stoffes in Wasser bzw. in einem flüssigen Medium Anwendung finden soll.

Durch die Energieversorgung in Form von Batterien oder Akkumulatoren wird Strom bereitgestellt, um einen Betrieb der Mittel zum Einstellen/Messen des vorbestimmten Volumenstroms und der Speichermittel zu gewährleisten. Die Batterien oder Akkumulatoren sind bei Bedarf auch austauschbar.

Je nach Aufgabenstellung und Einsatzzweck der Erfindung ist es möglich, den vorbestimmten Strömungsquerschnitt, der innerhalb der Messkammer des Gehäuses der Vorrichtung im Bereich des Trägermaterials gebildet wird, auch durch die Formgebung des Trägermaterials festzulegen. Anders ausgedrückt, ist der vorbestimmte Strömungsquerschnitt innerhalb der Messkammer auch von der Formgebung des Trägermaterials abhängig. Das Trägermaterial kann beispielsweise flächig, röhrenförmig, fadenförmig oder kugelförmig ausgebildet sein, wobei der resultierende Strömungsquerschnitt bei diesen Varianten jeweils verschieden groß ist. In Ergänzung zu einem unterschiedlich großen Strömungsquerschnitt unterscheiden sich die genannten Form-Varianten des Trägermaterials auch durch eine verschieden große freie Oberfläche, an der eine Akkumulation des gesuchten Stoffes möglich ist.

Der Einsatz der erfindungsgemäßen Vorrichtung ist bei unterschiedlichen Randbedingungen bzw. Gewässertypen möglich. Beispielsweise kann die Vorrichtung in Verbindung mit durchströmten Rohrleitungen eingesetzt werden, nämlich im Wege eines Bypasses von Druckrohrleitungen mit abgezweigtem Teilstrom. Die kinetische Energie, mit welcher eine solche Druckrohrleitung von Wasser bzw. einem flüssigen Medium durchströmt wird, kann hierbei auch für ein Durchströmen der Messkammer der Vorrichtung verwendet werden. Zum Einstellen eines optimalen Volumenstroms können die hierzu vorgesehenen Mittel ein Ventil umfassen, das entweder stromaufwärts des Einlasses der Messkammer oder stromabwärts des Auslasses der Messkammer angeordnet ist. Durch eine geeignete Betätigung des Ventils wird die gewünschte Durchflussmenge für Wasser bzw. das flüssige Medium eingestellt.

Alternativ ist der Einsatz der erfindungsgemäßen Vorrichtung auch bei einem sogenannten Oberflächengewässer möglich, das einen Wasservorrat bildet. Hierbei kann der Einlass der Messkammer der Vorrichtung an eine Entnahme dieses Wasservorrats angeschlossen werden. Der optimale Volumenstrom für das Wasser bzw. das flüssige Medium kann durch eine Pumpe gewährleistet bzw. erzeugt werden, die entweder zwischen dem Einlass der Messkammer und dem Wasservorrat, oder zwischen dem Auslass der Messkammer und dem Wasservorrat, angeordnet ist. Das Bereitstellen einer solchen Pumpe erfolgt deshalb, weil in dem Oberflächengewässer bzw. dem Wasservorrat in der Regel keine ausreichende natürliche Strömung gegeben ist, die ein Durchströmen der Messkammer der Vorrichtung gewährleistet.

Nach einer weiteren Alternative ist der Einsatz der erfindungsgemäßen Vorrichtung bei sogenannten Grundwassermessstellen möglich. Hierbei kann das Gehäuse der Vorrichtung in ein Filterrohr eines Grundwasserbrunnens oder dergleichen eingesetzt werden, derart, dass eine Strömung in diesem Filterrohr in einem Längenabschnitt, der einer Länge der Vorrichtung entspricht, ausschließlich durch die Messkammer der Vorrichtung hindurchtritt. Das Durchströmen der Messkammer mit einem optimalen Volumenstrom wird durch eine Pumpe gewährleistet, die angrenzend zum Einlass der Messkammer oder angrenzend zum Auslass der Messkammer angeordnet ist.

Alle der obigen Anwendungen bzw. Alternativen für einen möglichen Einsatz der erfindungsgemäßen Vorrichtung basieren auf dem Prinzip einer durchströmten Messkammer, in der das Trägermaterial angeordnet ist, wobei dann wie erläutert eine Akkumulation des gesuchten Stoffes an der Oberfläche des Trägermaterials möglich ist, wenn das Wasser bzw. das flüssige Medium an dem Trägermaterial vorbeiströmt bzw. das Trägermaterial durchströmt.

In vorteilhafter Weiterbildung der Erfindung ist es möglich, auch eine Mehrzahl von Vorrichtungen vorzusehen, entweder nach Logik einer Reihenschaltung oder einer Parallelschaltung, oder einer Kombination von Reihenschaltung und Parallelschaltung. Durch das Vorsehen einer solchen Mehrzahl von Vorrichtungen kann die Messgenauigkeit in Bezug auf das Bestimmen einer Menge des gesuchten Stoffes in Wasser bzw. in dem flüssigen Medium nochmals verbessert werden, bzw. auf mehrere verschiedene gesuchte Stoffe erweitert werden. In diesem Zusammenhang darf darauf hingewiesen werden, dass bei einem gleichzeitigen Einsatz von mehreren Vorrichtungen die zugehörigen Trägermaterialien entweder identisch oder unterschiedlich ausgestaltet sein können.

Durch den gleichzeitigen Einsatz einer Mehrzahl von Vorrichtungen, wie soeben erläutert mittels einer Reihen- und/oder Parallelschaltung, ergeben sich mehrere Optionen bzw. Vorteile:
- Eine Mehrfachbestimmung bei gleichem Messzeitraum, gleichem Kollektormaterial und gleicher Zielsubstanz führt zu einer statistischen Absicherung der Messergebnisse.
- Die Verwendung verschiedener Kollektormaterialien für den gleichen Stoff mit unterschiedlicher Sensitivität für die Zielsubstanz sichert die Detektion und/ oder die Aussagegenauigkeit.
- Es ist eine zeitliche Differenzierung der Kollektionsbefunde durch unterschiedlich lange Messzeiträume möglich, z.B. mit vier Vorrichtungen über max. 4 Wochen. Für dieses Beispiel können hierbei die Trägermaterialien aus den jeweiligen Vorrichtungen im Abstand von einer Woche entnommen werden, d.h. das Trägermaterial aus der ersten Vorrichtung nach 1 Woche, das Trägermaterial aus der zweiten Vorrichtung nach 2 Wochen, das Trägermaterial aus der dritten Vorrichtung nach 3 Wochen, und das Trägermaterial aus der vierten Vorrichtung nach 4 Wochen. Hierdurch kann eine mittlere Konzentrationen über die jeweiligen Teil-Messzeiträume differenziert erfasst werden, wobei ggf. zwischen Zeiträumen ohne, geringer und hoher Belastung unterschieden werden kann. In Abweichung von dem obigen Beispiel versteht sich, dass auch mehr oder weniger als vier Vorrichtungen in Reihe und/oder parallel angeordnet sein können, wobei die Messzeiträume auch weniger oder mehr als 4 Wochen betragen können.
- Die Verwendung von unterschiedlichen Kollektormaterialien für verschiedene Zielsubstanzen ermöglicht die Erfassung eines erweiterten Stoffspektrums.

Ein Verfahren nach der vorliegenden Erfindung dient zum Bestimmen einer Kalibrierfunktion für die Konzentration zumindest eines Stoffes, oder alternativ eines Stoffgemisches, in einem flüssigen Medium, vorzugsweise Wasser. Bei diesem Verfahren kommt eine Vorrichtung wie vorstehend erläutert zum Einsatz, wobei vor dem Messeinsatz der Vorrichtung für den zu untersuchenden Stoff und das gewählte Trägermaterial der Vorrichtung einmalig eine Kalibrierfunktion durchgeführt wird, die folgende Schritte umfasst:
(i) Bereitstellen eines Trägermaterials mit einer Oberfläche, die für den Stoff akkumulationsfähig ist, derart, dass der Stoff an der Oberfläche des Trägermaterials akkumulierbar ist, wenn das flüssige Medium an dem Trägermaterial vorbeiströmt oder das Trägermaterial durchströmt,
(ii) Bestimmen eines optimalen Volumenstroms des flüssigen Mediums für ein Vorbei- oder Durchströmen an dem bzw. durch das Trägermaterial in aufeinanderfolgenden Messungen, nämlich durch Einstellen von unterschiedlich großen Volumenströmen für das flüssige Medium bei jeweils vorbestimmten Konzentrationen, mit denen der Stoff in dem flüssigen Medium enthalten ist, und mit jeweils vorbestimmten Einsatzdauern, wobei der Volumenstrom dann einen optimalen Wert annimmt, wenn für eine jeweils vorbestimmte Konzentration, mit welcher der Stoff in dem flüssigen Medium enthalten ist, und für eine vorbestimmte Einsatzdauer eine stetige Zunahme einer Akkumulation des Stoffs an der Oberfläche des Trägermaterials vorliegt, und
(iii) Bestimmen der Akkumulation des Stoffs an der Oberfläche des Trägermaterials mit jeweils unterschiedlichen Konzentrationen des Stoffs in dem flüssigen Medium und mit jeweils unterschiedlichen Einsatzdauern, unter Berücksichtigung des in Schritt (ii) ermittelten optimalen Volumenstroms, und
(iv) Generieren eines Datensatzes auf Grundlage des Schritts (iii), um damit eine Kalibrierfunktion zu erzeugen, so dass bei einer anschließenden Messung des flüssigen Mediums anhand der Akkumulation des Stoffes auf der Oberfläche des Trägermaterials ein Rückschluss auf eine Konzentration des Stoffes in dem flüssigen Medium möglich ist,
wobei die Konzentration im flüssigen Medium allein aus der Untersuchung der akkumulierten Stoffmenge auf dem Trägermaterial mit Bezug auf die in Schritt (iv) erzeugte Kalibrierfunktion sowie die erfassten Daten zum Volumenstrom im Messzeitraum bestimmt wird.

Dem obigen erfindungsgemäßen Verfahren liegt die wesentliche Erkenntnis zugrunde, dass für den Messeinsatz zunächst ein optimaler Volumenstrom bestimmt wird, bei dem eine stetige Zunahme der Akkumulation des Stoffs an der Oberfläche des Trägermaterials vorliegt. Bei diesem optimalen Volumenstrom handelt es sich um eine Strömungsgeschwindigkeit, mit der das flüssige Medium an der Oberfläche des Trägermaterials vorbeiströmt bzw. das Trägermaterial durchströmt, ohne dass es dabei zu einem "Abreißen" der Kollektion, d.h. zu einer abrupten Verminderung der Akkumulation des Stoffs an der Oberfläche des Trägermaterials kommt. Dabei erhöht sich der Kollektionsbefund proportional zum eingestellten Volumenstrom. Im Anschluss daran wird dann der Kollektionsprozess, d.h. die Akkumulation des gesuchten Stoffes an einer Oberfläche des Trägermaterials, unter bekannten Bedingungen kalibriert. Dies bedeutet, dass - unter Berücksichtigung des ermittelten optimalen Volumenstroms - bei unterschiedlichen Konzentrationen des Stoffes bzw. der Zielsubstanz in einem gesteuerten Volumenstrom des flüssigen Mediums und mit unterschiedlichen Einsatzdauern bzw. Kontaktzeiten eine Kalibrierfunktion aufgenommen wird.

Bei der vorstehend genannten Bestimmung der Kalibrierfunktion wird das Verhältnis zwischen dem Gehalt des Stoffes im Messwasserstrom über den Einsatzzeitraum und dem zugehörigem Kollektionsnachweis an der Oberfläche des Trägermaterials ermittelt. Im Umkehrschluss kann dann in der Praxis aus dem ermittelten Kollektionsbefund, d.h. der Menge des Stoffs, die an der Oberfläche des Trägermaterials akkumuliert worden ist, auf den Gehalt des Stoffs bzw. dessen Konzentration im Messwasserstrom im Messzeitraum geschlossen werden.

Auf Grundlage der obigen Kalibrierfunktion bzw. deren Bestimmung ist es möglich, dass ein tatsächlicher Messeinsatz mit der erfindungsgemäßen Vorrichtung derart durchgeführt wird, dass eine Menge an Wasser bzw. eines flüssigen Mediums stets mit dem optimalen Volumenstrom wie erläutert durch die Messkammer der Vorrichtung hindurchgeleitet wird, so dass sich in Folge dessen dann der gesuchte Stoff an der Oberfläche des Trägermaterials ablagern bzw. akkumulieren kann. Mit Hilfe der im Rahmen der Kalibrierfunktion zuvor gewonnenen Daten ist bei Abschluss eines Messzeitraums gewährleistet, dass dann unter Berücksichtigung der festgestellten Menge des Stoffs, die an der Oberfläche des Trägermaterials akkumuliert worden ist, ein Rückschluss auf die Konzentration des gesuchten Stoffs in Wasser bzw. in dem flüssigen Medium gewonnen wird.

Ein weiterer Effekt des obigen Verfahrens nach der vorliegenden Erfindung ist darin begründet, dass eine untere Sensitivitätsgrenze bestimmt werden kann, d.h. eine Mindestmenge des Stoffs, die für den Kollektionsnachweis, bzw. eine Akkumulation des Stoffs an der Oberfläche des Trägermaterials, in einem bestimmten Kollektionszeitraum erforderlich ist.

Die Erfindung sieht somit ein Verfahren zum Bestimmen einer Konzentration eines Stoffes in einem flüssigen Medium vor, bei dem eine Vorrichtung wie oben erläutert eingesetzt wird, und bei dem vor dem eigentlichen Messeinsatz der Vorrichtung eine Kalibrierfunktion wie vorstehend erläutert aufgenommen bzw. bestimmt wird, nämlich unter Verwendung der obigen erfindungsgemäßen Vorrichtung. Auf Grundlage dessen ist dann eine Rückrechnung auf die Belastung im Messzeitraum möglich, um damit zunächst eine Stoffmenge des gesuchten Stoffes in dem flüssigen Medium zu bestimmen.

Das grundsätzliche Prinzip der vorliegenden Erfindung, wonach die Konzentration eines gesuchten Stoffes in einem flüssigen Medium bestimmt wird, beruht darauf, dass der gesuchte Stoff mittels der Akkumulation an bzw. auf dem Trägermaterial zunächst in Form einer Stoffmenge über den gesamten Messzeitraum erfasst wird. Hierbei wird nur eine Teilmenge des Stoffes aus dem Messwasserstrom an dem Trägermaterial gebunden, wobei dann aus dem Kollektionsbefund mit Hilfe der Kalibrierfunktion die im Messwasserstrom tatsächlich enthaltene Stoffmenge ermittelt wird. Zusammen mit dem gemessenen Volumen des Messwasserstroms über den gesamten Einsatzzeitraum ergibt sich dann eine theoretische mittlere Konzentration im Messwasserstrom, d.h. Stoffmenge pro Volumen. Diese mittlere Konzentration im Messwasserstrom kann direkt auf das untersuchte Wasser bzw. flüssige Medium übertragen werden. Es werden also stets zunächst Stoffmengen für den gesuchten Stoff bestimmt, wobei anschließend daraus eine über den Messzeitraum gemittelte Konzentration abgeleitet wird. Die im Messzeitraum im Messwasserstrom auftretenden Konzentrationszustände werden nicht differenziert erfasst, sondern werden als gesammelte Gesamtstoffmenge auf der Oberfläche des Trägermaterials akkumuliert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachfolgend anhand von bevorzugten Ausführungsformen in der Zeichnung schematisch dargestellt, und wird unter Bezugnahme auf die Zeichnung ausführlich beschrieben.

Es zeigen:
- Figur 1: eine seitliche Querschnittsansicht einer erfindungsgemäßen Vorrichtung nach einer ersten Ausführungsform,
- Figur 2: jeweils seitliche Querschnittsansichten von erfindungsgemäßen Vorrichtungen gemäß weiterer Ausführungsformen,
- Figur 3: ein schematisches Ablaufdiagramm zur Durchführung eines Verfahrens nach der vorliegenden Erfindung,
- Figur 4: eine schematisch vereinfachte Prinzipskizze für einen möglichen Einsatz einer erfindungsgemäßen Vorrichtung,
- Figur 5: eine schematisch vereinfachte Prinzipskizze für einen möglichen alternativen Einsatz einer erfindungsgemäßen Vorrichtung,
- Figur 6: eine schematisch vereinfachte Prinzipskizze für einen möglichen alternativen Einsatz einer erfindungsgemäßen Vorrichtung,
- Figur 7: eine Querschnittsansicht einer erfindungsgemäßen Vorrichtung nach einer weiteren Ausführungsform, die in gleicher Weise wie in Figur 4 veranschaulicht eingesetzt wird, und
- Figur 8: eine Querschnittsansicht einer erfindungsgemäßen Vorrichtung nach einer weiteren Ausführungsform.

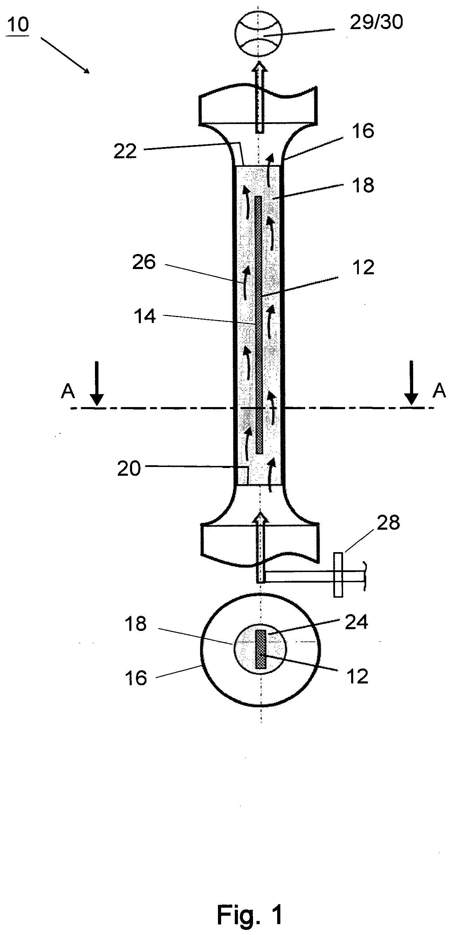

Fig. 1 zeigt im oberen Bereich eine seitliche Längsschnittansicht einer erfindungsgemäßen Vorrichtung 10 nach einer ersten Ausführungsform. Die Vorrichtung 10 umfasst ein Trägermaterial 12, an dessen Oberfläche 14 Wasser bzw. ein flüssiges Medium vorbeiströmen kann. Die Vorrichtung 10 umfasst ein Gehäuse 16 mit einer Durchfluss-Messkammer 18, in der das Trägermaterial 12 angeordnet ist. An der Durchfluss-Messkammer 18 sind ein Einlass 20 und ein Auslass 22 vorgesehen.

Die Erfindung bezieht sich auf eine Untersuchung von Wasser bzw. einem flüssigen Medium, nämlich im Hinblick auf eine mögliche Beladung bzw. Konzentration mit einem gesuchten Stoff. Für die nachfolgende Erläuterung wird zur Vereinfachung das flüssige Medium stets nur als Wasser bezeichnet, ohne dass hierin eine Einschränkung allein auf Wasser zu verstehen ist.

Im Rahmen der vorliegenden Erfindung werden ausschließlich Trägermaterialien 12 verwendet, die eine kumulierende Aufnahme bzw. Akkumulation des gesuchten Stoffs an deren Oberfläche 14 gewährleisten

Das Trägermaterial 12 ist innerhalb der Messkammer 18 angeordnet, derart, dass sich innerhalb der Messkammer 18 im Bereich des Trägermaterials 12 ein vorbestimmter Strömungsquerschnitt 24 bildet. Die Pfeile 26 in Fig. 1 verdeutlichen eine Strömungsrichtung, in der Wasser innerhalb der Messkammer 18 an dem Trägermaterial 12 vorbeiströmt.

Der untere Bereich von Fig. 1 zeigt eine Querschnittsansicht entlang der Linie A-A des oberen Teils von Fig. 1, und verdeutlicht den Strömungsquerschnitt 24, der orthogonal zur Strömungsrichtung 26 verläuft.

Stromaufwärts des Einlasses 20 zur Durchfluss-Messkammer 18 sind Mittel 28 zum Einstellen eines vorbestimmten Volumenstroms für das Wasser angeordnet. Diese Mittel 28 sind zur Vereinfachung in Fig. 1 stark vereinfacht und nur symbolisch dargestellt. Bei den Mitteln 28 kann es sich um ein steuer- bzw. regelbares Ventil handeln, wobei in Abhängigkeit der Schaltstellung dieses Ventils ein gewünschter Volumenstrom eingestellt wird, mit dem die Messkammer 18 von Wasser durchströmt wird. Alternativ hierzu kann es sich bei den Mitteln 28 auch um eine Pumpe handeln, deren Durchsatz bzw. Förderleistung in Anpassung an den für die Vorrichtung 10 gewünschten Volumenstrom des Wassers einstellbar ist. Nachstehend sind weitere Hinweise gegeben, bei welchen Einsatzarten der Vorrichtung 10 die Mittel 28 als Ventil oder als Pumpe ausgebildet sind.

Stromabwärts des Auslasses 22 sind Mittel 29 zum Messen des Volumenstroms vorgesehen, mit dem die Messkammer 18 von Wasser in einem bestimmten Messzeitraum durchströmt worden ist. Bei diesen Mitteln 29 kann es sich um handelsübliche Durchflusszähler oder dergleichen handeln.

Zum Aufzeichnen der Daten eines Wasservolumenstroms, der die Messkammer 18 der Vorrichtung 10 durchströmt hat, sind Speichermittel 30 vorgesehen. Diese Speichermittel 30 können beispielsweise in die Mittel 29 zum Messen des Volumenstroms integriert sein, was in Fig. 1 vereinfacht durch die Bezeichnung "29/30" zum Ausdruck kommt. Alternativ hierzu ist es auch möglich, die Speichermittel 30 als separates Bauteil vorzusehen. Die Speichermittel 30 können über eine (nicht gezeigte) Datenleitung, z.B. eine Kabelverbindung oder in Form einer kabellosen Verbindung, z.B. eine Funkstrecke, geeignet von außen ausgelesen und ggf. auch rückgesetzt werden.

Die Mittel 28 zum Einstellen eines Volumenstroms, die Mittel 29 zum Messen des Volumenstroms und die Speichermittel 30 sind in das Gehäuse 16 integriert, was zur Vereinfachung in der Darstellung von Fig. 1 nicht gezeigt ist. Hierbei sind die Mittel 28, 29 geeignet angrenzend zum Einlass 20 bzw. zum Auslass 22 positioniert, um ein Ein- und Ausströmen von Wasser zu gewährleisten, bei gleichzeitiger Aufzeichnung/Messung dieses Volumenstroms. Eine solche Integration der Mittel 28, 29, 30 in das Gehäuse 16 führt zu einer robusten Ausführungsform der Vorrichtung 10 und verbessert auch deren Handling in der Praxis.

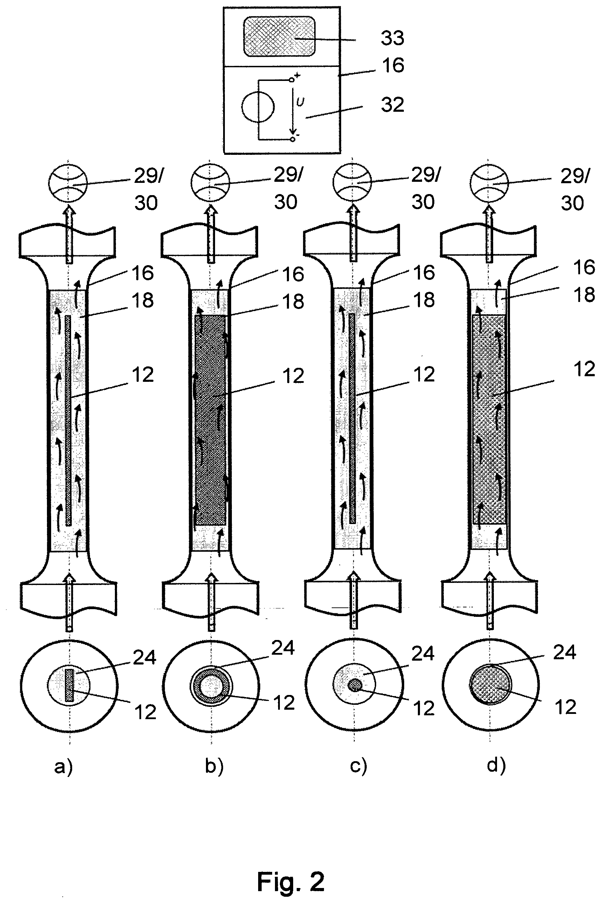

Bei dem Trägermaterial 12 von Fig. 1 kann es sich um einen flächigen Körper handeln, der in Form eines Rechtecks ausgebildet ist. Diese Ausführungsform entspricht auch der Darstellung einer Vorrichtung 10 gemäß Fig. 2 a).

Fig. 2 zeigt in den Darstellungen b) bis d) weitere Ausführungsformen einer erfindungsgemäßen Vorrichtung 10, bei der das Trägermaterial 12 in anderer Form ausgebildet ist. Gleiche Merkmale wie im Vergleich zu Fig. 1 sind hierin mit gleichen Bezugszeichen versehen, und zur Vermeidung von Wiederholungen nicht nochmals erläutert. Im Einzelnen ist bei der Ausführungsform von Fig. 2 b) das Trägermaterial 12 röhrenförmig ausgebildet, bei der Fig. 2 c) fadenförmig ausgebildet, und bei der Fig. 2 d) kugelförmig ausgebildet. Diesbezüglich darf darauf hingewiesen werden, dass das Wasser an dem Trägermaterial 12 gemäß Fig. 2 b) und Fig. 2 c) an dessen Oberfläche 14 vorbeiströmt. Demgegenüber wird das Trägermaterial 12 bei der Ausführungsform gemäß Fig. 2 d) von Wasser durchströmt, weil das Trägermaterial 12 durch eine Vielzahl von kleinen Kugeln ausgebildet ist, die innerhalb der Messkammer 18 geeignet gehalten sind.

Die Teildarstellungen a) bis d) in Fig. 2 sind jeweils als Alternativen zu verstehen. In Fig. 2 ist symbolisch stark vereinfacht eine Energieversorgung 32 dargestellt, die den jeweiligen Alternativen gemäß a) bis d) von Fig. 2 zugeordnet ist. Die Energieversorgung 32 kann in Form von Batterien oder Akkumulatoren, oder in Form einer Netzversorgung ausgebildet sein. Mit "33" ist eine Steuerungseinrichtung bezeichnet, durch die die Mittel 28, 29 und die Speichermittel 30 angesteuert werden können, auf Basis von geeigneten (nicht gezeigten) signaltechnischen Verbindungen zu diesen Mitteln.

Die Energieversorgung 32 und die Steuerungseinrichtung 33 können in das Gehäuse 16 der Vorrichtung 10 integriert sein. Dies ist im oberen Bereich von Fig. 2 dadurch veranschaulicht, dass die Symbole für "32" und "33" innerhalb des Symbols für das Gehäuse "16" angeordnet sind.

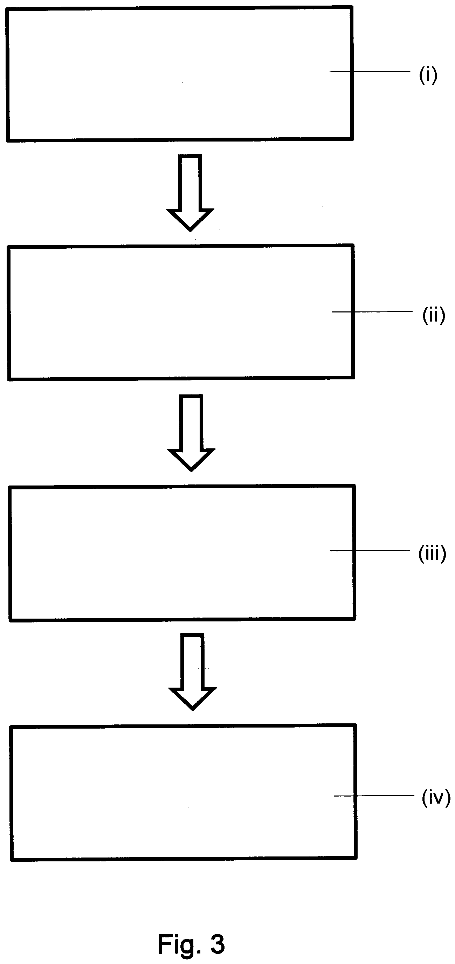

Nachfolgend wird unter Bezugnahme auf Fig. 3 - symbolisch vereinfacht - ein Ablauf erläutert, mit dem eine sogenannte Kalibrierfunktion für die Konzentration zumindest eines Stoffes, der in Wasser enthalten ist und mittels der Erfindung nachgewiesen werden soll, bestimmt werden kann.

In Schritt (i) wird ein Trägermaterial mit einer Oberfläche bereitgestellt, die für einen gesuchten Stoff, der in Wasser enthalten sein kann, akkumulationsfähig ist. Entsprechend kann sich ein Stoff, der in Wasser enthalten ist, an der Oberfläche des Trägermaterials akkumulieren, wenn das Wasser an dem Trägermaterial vorbeiströmt oder ein solches Trägermaterial durchströmt. Die Bereitstellung des vorstehend genannten Trägermaterials kann mittels einer erfindungsgemäßen Vorrichtung 10 erfolgen, die in Fig. 1 und Fig. 2 bereits erläutert worden ist.

In Schritt (ii) wird anschließend ein optimaler Volumenstrom bestimmt, mit dem das Wasser an dem Trägermaterial 12 vorbeiströmt bzw. durch das Trägermaterial 12 hindurchströmt. Ein optimaler Volumenstrom für das Wasser ist dann gegeben, wenn eine stetige Zunahme einer Akkumulation des Stoffes an der Oberfläche 14 des Trägermaterials 12 vorliegt, ohne dass es dabei zu einem "Abreißen" bzw. zu einer abrupten Verminderung der Kollektion des Stoffs an der Oberfläche 14 kommt. Im Einzelnen wird ein solcher optimaler Volumenstrom für das Wasser dadurch ermittelt, dass unterschiedlich große Volumenströme bei jeweils vorbestimmten Konzentrationen, mit denen der Stoff in dem Wasser enthalten ist, und mit jeweils vorbestimmten Einsatzdauern, d.h. Messzeiträumen eingestellt werden.

Anschließend wird in Schritt (iii), und unter Berücksichtigung des zuvor in Schritt (ii) ermittelten optimalen Volumenstroms, eine Akkumulation bzw. Einstellung des Stoffs an der Oberfläche 14 des Trägermaterials 12 bestimmt, nämlich mit jeweils unterschiedlichen Konzentrationen des Stoffs in dem Wasser und mit jeweils unterschiedlichen Einsatzdauern bzw. Messzeiträumen. Auf Grundlage dessen wird dann in Schritt (iv) eine Kalibrierfunktion aufgenommen bzw. ein entsprechender Datensatz generiert, wobei das Verhältnis zwischen Gehalt im Messwasserstrom über den Einsatzzeitraum und zugehörigem Kollektionsnachweis an dem Trägermaterial 12 ermittelt wird. Eine solche Kalibrierfunktion bildet dann eine Grundlage dafür, im vorgesehenen Messeinsatz in der Praxis, und vorzugsweise unter Verwendung der Vorrichtung 10 gemäß Fig. 1 oder Fig. 2, aus den zuvor gewonnenen Daten einen Rückschluss auf die Menge bzw. durchschnittliche Konzentration des gesuchten Stoffs in dem Wasser bzw. in dem flüssigen Medium im Messzeitraum zu gewinnen.

Falls ein Kollektionsbefund ausbleibt bzw. sich keine nennenswerte Menge des Stoffs an der Oberfläche 14 des Trägermaterials 12 akkumuliert hat, ist dies ein Beleg dafür, dass in dem untersuchten Wasser der Gehalt des gesuchten Stoffs im Messzeitraum unterhalb einer unteren Sensitivitätsschwelle gelegen hat.

Die vorstehend erläuterte Bestimmung einer Kalibrierfunktion gemäß Fig. 3 bildet eine Grundlage dafür, unter Verwendung der Vorrichtung 10 anschließend einen Messeinsatz in der Praxis durchzuführen, um bestimmungsgemäß die Konzentration eines gesuchten Stoffs in Wasser durchzuführen.

Vor einem Messeinsatz in der Praxis ist für jeden gesuchten Stoff, in diesem Sinne auch als Zielzubstanz bezeichnet, einmalig eine Kalibrierung im Labormaßstab mit hierzu ausgewählten Materialtypen für das Trägermaterial 12 erforderlich. Wie erläutert, werden mit der Kalibrierung die stoffspezifischen Betriebsparameter zur Passivsammlerbeladung, d.h. für eine Akkumulation der Zielsubstanz an der Oberfläche 14 des Trägermaterials bestimmt, nämlich:
- Kollektionsrate in Abhängigkeit von der Strömungsgeschwindigkeit des Wassers angrenzend zum Trägermaterial, d.h. innerhalb der Messkammer 18,
- Kollektionsrate in Abhängigkeit von der Stoffmenge im Messwasserstrom,
- Kollektionsrate in Abhängigkeit von der Verteilung der Gesamtstoffmenge über den Messzeitraum, und
- Rückhalt von erzielten Beladungen an dem Trägermaterial 12 im unbelasteten Messwasserstrom (variierende Belastungen mit belastungsfreien Zeiträumen).

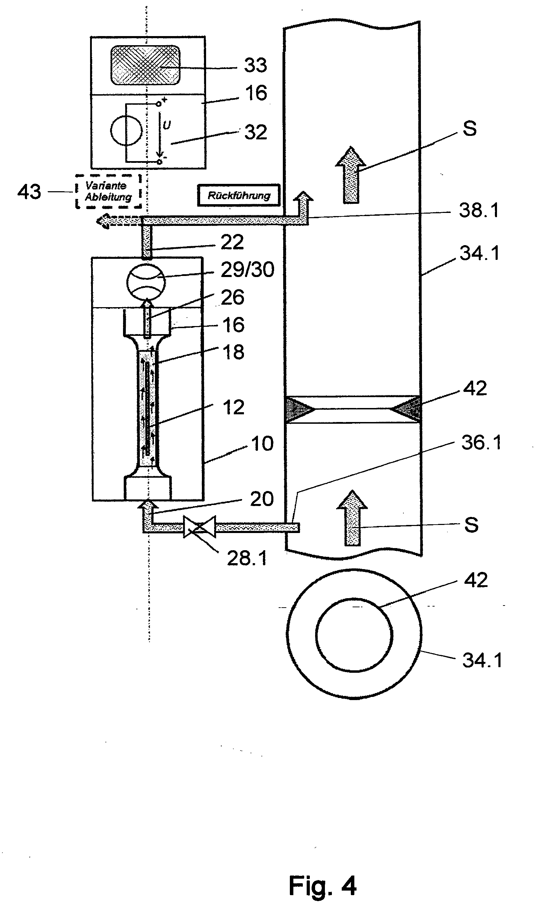

Nachstehend sind unter Bezugnahme auf die Fig. 4-6 verschiedene Möglichkeiten erläutert, wie sich die Vorrichtung 10 in der Praxis einsetzen lässt. Hierzu im Einzelnen:

In der Fig. 4 ist - prinzipiell vereinfacht - der Einsatz einer Vorrichtung 10 von Fig. 1 in Verbindung mit einer von Wasser durchströmten Rohrleitung 34.1 gezeigt. Eine solche Rohrleitung 34.1 weist eine Entnahme 36.1 und eine Einspeisung 38.1 auf. Die Vorrichtung 10 ist an die Rohrleitung 34.1 angeschlossen, indem der Einlass 20 mit der Entnahme 36.1 verbunden ist, wobei der Auslass 22 mit der Einspeisung 38.1 verbunden sein kann. In der Verbindungsleitung zwischen der Entnahme 36.1 und dem Einlass 20 ist ein Ventil 28.1 angeordnet.

In Entsprechung der Pfeile S, wie in Fig. 4 gezeigt, wird die Rohrleitung 34.1 von Wasser durchströmt. Die hierdurch vorliegende Strömungsenergie ist ebenfalls ausreichend dafür, dass das von der Rohrleitung 34.1 abgezweigte Wasser ebenfalls die Messkammer 18 der Vorrichtung 10 durchströmt. Der vorstehend erläuterte optimale Volumenstrom für das Wasser wird durch eine Ansteuerung bzw. Regelung des Ventils 28.1 erzielt. Hierdurch ist dann gewährleistet, dass die Messkammer 18 der Vorrichtung 10 von Wasser tatsächlich mit dem optimalen Volumenstrom durchströmt wird. Die Steuerung bzw. Regelung des Ventils 28.1 erfolgt mittels der Steuerungseinrichtung 33 oder durch eine manuelle Einstellung.

Nachdem das zu untersuchende Wasser die Messkammer 18 der Vorrichtung 10 durchströmt hat, kann das Wasser durch eine Verbindungsleitung, die zwischen dem Auslass 22 und der Einspeisung 28 vorgesehen ist, zurück in die Rohrleitung 34.1 geführt werden. Hierzu ist von Bedeutung, dass der Druck in der Rohrleitung 34.1 angrenzend an die Einspeisung 38.1 geringer ist als angrenzend zu der Entnahme 36.1. Falls ein solch geringerer Druck angrenzend an die Einspeisung 38.1 nicht bereits durch die Abmessungen bzw. Strömungsverhältnisse innerhalb der Rohrleitung 34.1 und der Vorrichtung 10 gegeben ist, kann zu diesem Zweck ergänzend eine Stauscheibe 42 mit einer Querschnittsreduzierung vorgesehen sein, die innerhalb der durchströmten Rohrleitung 34.1 zwischen der Entnahme 36.1 und der Einspeisung 38.1 angeordnet ist.

Der Einsatz einer Vorrichtung 10 gemäß der Darstellung von Fig. 4 entspricht einer Bypasslösung, bei der ein Teilstrom des Wassers aus einer durchströmten Rohrleitung 34.1 abgezweigt wird, um anschließend wie erläutert durch die Messkammer 18 der Vorrichtung 10 geleitet zu werden. Durch eine geeignete Regelung des Ventils 28.1 kann für das Wasser ein optimaler Volumenstrom eingestellt werden, mit dem es durch die Messkammer 18 strömt. Gesonderte Pumpen oder dergleichen sind bei einem solchen Einsatz der Vorrichtung 10 entbehrlich, weil von der kinetischen Energie Gebrauch gemacht wird, die aufgrund einer Durchströmung der Rohrleitung 34.1 sowieso gegeben ist.

Für den Fall, dass die kinetische Energie in der durchströmten Rohrleitung 34.1 nicht dazu ausreicht, auch ein Durchströmen der Messkammer 18 zu gewährleisten, kann vorgesehen sein, dass in der Verbindungsleitung zwischen der Entnahme 36.1 und dem Einlass 20 anstatt des Ventils 28.1 eine geeignete Pumpe vorgesehen ist. Eine solche Pumpe kann dann ebenfalls von der Steuerungseinrichtung 33 angesteuert werden, um den optimalen Volumenstrom einzustellen, mit dem die Messkammer 18 von Wasser durchströmt wird.

Alternativ zu einer Rückführung des Wassers zurück in die Rohrleitung 34.1 kann es, nach einem Austreten aus dem Auslass 22, auch an die Umgebung oder in einen sonstigen Behälter bzw. geeignetes Reservoir abgeleitet werden, was in Fig. 4 vereinfacht durch das Bezugszeichen 43 angedeutet ist.

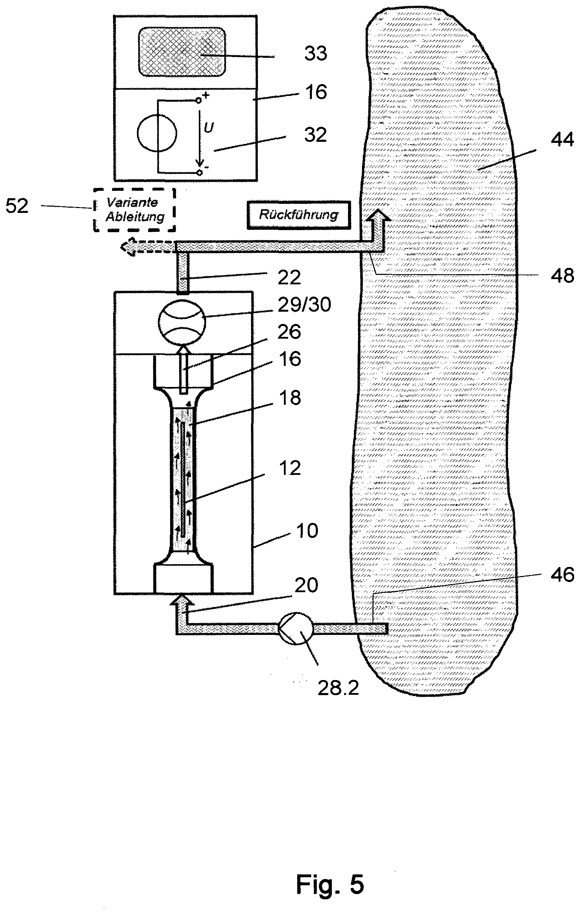

In Fig. 5 ist - prinzipiell vereinfacht - der Einsatz einer Vorrichtung 10 von Fig. 1 in Verbindung mit einem Oberflächengewässer gezeigt, wobei ein solches Oberflächengewässer nachstehend als Wasservorrat 44 bezeichnet wird. An dem Wasservorrat 44 sind eine Entnahme 46 und eine Rückführung 48 vorgesehen. Die Vorrichtung 10 ist an den Wasservorrat 44 angeschlossen, indem der Einlass 20 mit der Entnahme 46 verbunden ist, wobei der Auslass 22 mit der Rückführung 48 verbunden sein kann. In der Verbindungsleitung zwischen der Entnahme 46 und dem Einlass 20 ist eine Pumpe 28.2 angeordnet.

Der Wassermessstrom, der durch die Messkammer 18 der Vorrichtung 10 zu leiten ist, wird als Teilmenge aus dem Wasservorrat 44 entnommen. Hierbei wird der optimale Volumenstrom für das Wasser durch eine geeignete Ansteuerung der Pumpe 28.2 erzeugt. Die Ansteuerung bzw. Regelung der Pumpe 28.2 erfolgt durch die Steuerungseinrichtung 33. Nachdem das Wasser die Messkammer 18 der Vorrichtung 10 durchströmt hat, wird es entweder durch die Rückführung 48 in den Wasservorrat 44 zurückgespeist, oder durch eine Ableitung 52 ausgelassen, z.B. an die Umgebung oder in einen (nicht gezeigten) Behälter oder ein hierzu geeignetes Reservoir.

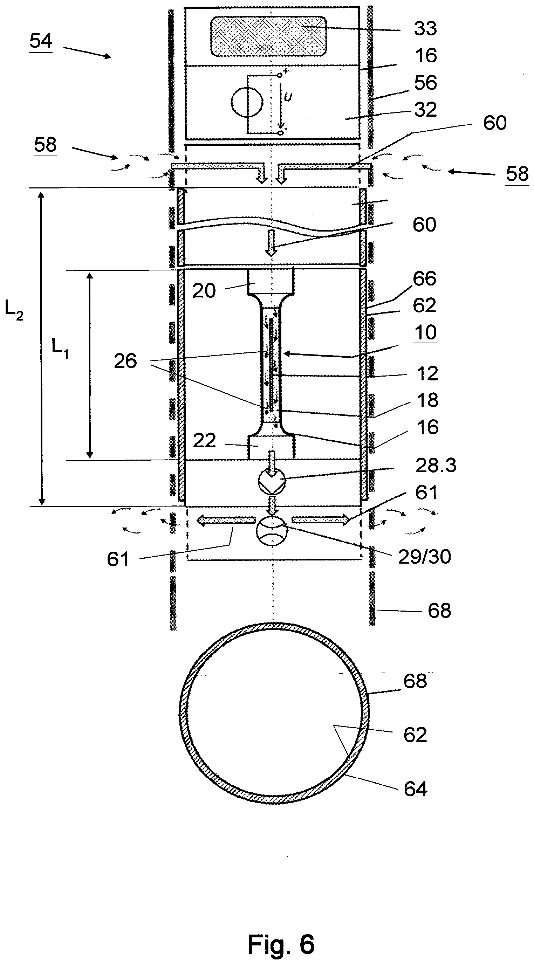

In der Fig. 6 ist - prinzipiell vereinfacht - der Einsatz einer Vorrichtung 10 gemäß Fig. 1 in Verbindung mit einer Grundwassermessstelle 54 gezeigt. Eine solche Grundwassermessstelle 54 weist ein Filterrohr 56 auf, in dem die Vorrichtung 10 in geeigneter Weise im Filterbereich angeordnet werden kann.

Die Anordnung bzw. Positionierung der Vorrichtung 10 innerhalb des Filterrohrs 56 erfolgt derart, dass Grundwasser 58 radial von außen in das Filterrohr 56 eintreten kann, und dabei einen Zufluss 60 bildet, der anschließend in den Einlass 20 der Vorrichtung 10 eintritt und durch die Messkammer 18 hindurchtritt, bevor es dann als Abfluss 61 radial wieder nach außen aus dem Filterrohr 56 austritt. Ein optimaler Volumenstrom für das Wasser, welches wie soeben erläutert durch die Messkammer 18 der Vorrichtung 10 strömt, wird durch eine Pumpe 28.3 gewährleistet, deren Förderleistung hierzu geeignet eingestellt wird.

Eine Positionierung der Vorrichtung 10 innerhalb des Filterrohrs 56 wird durch ein Stützrohr 62 erreicht, das innerhalb des Filterrohrs 56 eingepasst werden kann, und entsprechend einen geringfügig kleineren Durchmesser als das Filterrohr 56 aufweist. Diesbezüglich darf darauf hingewiesen werden, dass eine axiale Länge L₁ der Vorrichtung 10 kleiner gewählt ist als eine axiale Länge L₂ des Stützrohrs 62. Das Stützrohr 62 ist vorzugsweise massiv ausgebildet, so dass es im Bereich seiner Außenwandung 64 radial dicht ist. In Folge dessen kann das Grundwasser entlang der gesamten Länge L₂ nicht radial von außen in das Stützrohr 62, sondern nur - wie zuvor unter Bezugnahme auf den Zufluss 60 erläutert - an der oberen Stirnseite des Stützrohrs 62 eintreten. Optional kann vorgesehen sein, dass an dem Stützrohr 62 an dessen Außenumfangsfläche 66 eine Dichtung 68 angebracht ist. Diese Dichtung verfolgt ebenfalls den Zweck, dass ein Eintreten von Grundwasser radial von außen in das Stützrohr 62 blockiert bzw. nicht möglich ist.

Die Anordnung der Vorrichtung 10 innerhalb des Filterrohrs 56 mittels des Stützrohrs 62 ist derart gewählt, dass der Zufluss 60 an Grundwasser, der wie erläutert in eine obere Stirnseite des Stützrohrs 62 eintritt, anschließend ausschließlich durch den Einlass 20 der Vorrichtung 10 gelangt und dann durch deren Messkammer 18 strömt. Anders ausgedrückt, ist innerhalb des Stützrohrs 62 im Bereich von dessen axialer Länge L₂ eine sogenannte Kurzschlussströmung, die außerhalb der Vorrichtung 10 vorbeiführte, nicht möglich. Zu dem gleichen Zweck ist der optimale Volumenstrom, mit dem das Grundwasser die Messkammer 18 der Vorrichtung 10 durchströmt, geeignet so niedrig zu dimensionieren, dass ein Vertikaltransport des Wassers, in Form einer Kurzschlussströmung außerhalb des Filterrohrs 56 entlang von dessen Aussenumfangsfläche, ebenfalls ausgeschlossen ist.

Bezüglich aller obigen Einsatzmöglichkeiten der erfindungsgemäßen Vorrichtung 10 gemäß der Fig. 4, 5 und 6 darf darauf hingewiesen werden, dass der Betrieb von deren zugehörigen Komponenten, nämlich in Form des Ventils 28.1, der Pumpen 28.2 und 28.3, der Speichermittel 30 sowie der Steuerungseinrichtung 33, über die genannte Energieversorgung 32 sichergestellt ist. Bei einer Ausbildung dieser Energieversorgung 32 in Form von Batterien bzw. Akkumulatoren können diese wie erläutert in die Vorrichtung 10 eingehaust sein, z.B. durch eine geeignete Integration in das Gehäuse 16, und sind somit wasserdicht aufgenommen. Der Volumenstrom des Wassers, der durch die Messkammer 18 hindurchströmt, wird von den Speichermitteln 30 aufgezeichnet, wobei die entsprechenden Daten aus den Speichermitteln 30 ausgelesen werden, wenn nach Beendigung eines Messzeitraums die Stoffmenge, die an der Oberfläche 14 des Trägermaterials 12 akkumuliert worden ist, laboranalytisch bestimmt wird.

Es darf darauf hingewiesen werden, dass die Rohrleitung 34.1 (Fig. 4), der Wasservorrat 44 (Fig. 5) und die Grundwassermessstelle 54 (Fig. 6) und deren Zu- bzw. Ableitungen nicht per se Teil der erfindungsgemäßen Vorrichtung 10 sind. Vielmehr ist die Vorrichtung 10 dazu geeignet, hieran wie erläutert angeschlossen zu werden.

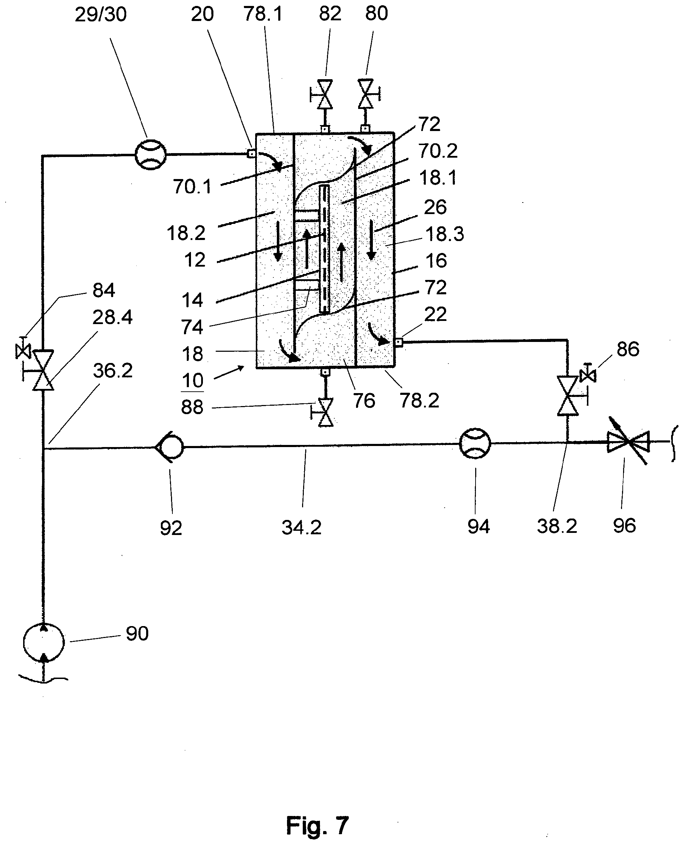

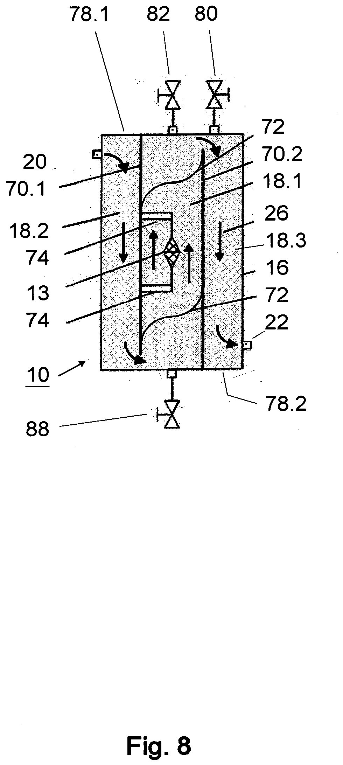

Nachstehend sind unter Bezugnahme auf die Fig. 7 und 8 weitere Ausführungsformen der erfindungsgemäßen Vorrichtung 10 erläutert. Soweit diese Ausführungsformen im Vergleich zu Fig. 1 gleiche Bauteile bzw. Merkmale aufweisen, sind diese mit gleichen Bezugzeichen versehen, und ggf. zur Vermeidung von Wiederholungen nicht nochmals erläutert. Hierzu im Einzelnen:
Die Vorrichtung 10 ist in Fig. 7 in einer Schnittansicht dargestellt, wobei deren Messkammer 18 mehrteilig ausgebildet ist, und sich in eine Zentralkammer 18.1, eine Vorkammer 18.2 und eine Nachkammer 18.3 unterteilt. In Entsprechung ihrer Bezeichnungen sind die Vorkammer 18.2 der Zentralkammer 18.1 vorgelagert, und die Nachkammer 18.3. der Zentralkammer 18.1 nachgelagert. Der Einlass 20 zur Messkammer 18 ist an der Vorkammer 18.2 vorgesehen, wobei der Auslass 22 aus der Nachkammer 18.3 herausführt.

Die einzelnen Kammern 18.1, 18.2 und 18.3 werden dadurch ausgebildet, dass innerhalb des Gehäuses 16 der Vorrichtung 10 zwei Strömungsleitbleche 70.1, 70.2 parallel zueinander angeordnet sind. Ein Abstand der beiden Strömungsleitbleche zueinander ist im Betrieb der Vorrichtung 10 stets gleich; Dies wird durch Federblechstreifen 72 gewährleistet, von denen die Strömungsleitbleche gegen eine Innenwandung des Gehäuses 16 gedrückt werden.

Das Trägermaterial 12 ist innerhalb der Zentralkammer 18.1 angeordnet, nämlich mittels einer Halterung 74, die an dem Strömungsleitblech 70.1 angebracht ist.

Beim Einströmen von Wasser in die Messkammer 18 durch den Einlass 20 gelangt es zunächst in die Vorkammer 18.2, anschließend in die Zentralkammer 18.1, wo es an dem Trägermaterial 12 vorbeiströmt, und anschließend in die Nachkammer 18.3, bevor es dann durch den Auslass 22 wieder aus der Messkammer 18 austritt. Aus der Schnittansicht von Fig. 7 ist ersichtlich, dass die Kammern 18.1, 18.2 und 18.3 derart miteinander verbunden sind, dass die Strömungsrichtung zwischen den jeweiligen Kammern um 180° umgekehrt wird, wobei eine Durchströmung der Kammern jeweils in einer gemeinsamen Ebene 76 stattfindet. Eine solche Umkehrung der Strömungsrichtung innerhalb der Messkammer 18 verfolgt den Zweck einer Strömungsberuhigung. Hierdurch wird erreicht, dass das Wasser, wenn es in der Zentralkammer 18.1 an dem Trägermaterial 12 vorbeiströmt, bereits strömungsberuhigt und z.B. frei von Verwirbelungen oder dergleichen ist, wodurch die Messgenauigkeit für eine Akkumulation der Zielsubstanz an der Oberfläche 14 des Trägermaterials verbessert wird.

Das Gehäuse wird durch eine obere Stirnseite 78.1 und eine untere Stirnseite 78.2 verschlossen. Zumindest die obere Stirnseite 78.1 ist abnehmbar ausgebildet. Das Strömungsleitblech 70.1, an dem die Halterung 74 für das Trägermaterial 12 angebracht ist, ist an der oberen Stirnseite 78.1 angebracht. Entsprechend kann eine Entnahme des Trägermaterials 12 aus der Messkammer 18 in einfacher Weise dadurch erfolgen, dass die obere Stirnseite 78.1 von dem Gehäuse 16 abgenommen wird, wodurch dann die Halterung 74 zugänglich wird. In gleicher Weise kann dadurch die Halterung 74 auch mit einem "frischen" Trägermaterial 12 bestückt werden.

Eine Inbetriebnahme der Vorrichtung 10 von Fig. 7 ist durch eine Mehrzahl von Ventilen gewährleistet. Mit Hilfe eines Durchlassventils 80, das in der oberen Stirnseite 78.2 angeordnet ist, kann die Messkammer 18 vollständig mit Wasser gefüllt werden. Eine enventuell notwendige Entlüftung ist durch Entlüftungsventile möglich, nämlich sowohl durch ein Entlüftungsventil 82, das ebenfalls in der oberen Stirnseite 78.1 angeordnet ist, als auch durch Entlüftungsventile 84, 86, die in einer Zuleitung zu der Vorrichtung 10 bzw. einer Ableitung von der Vorrichtung 10 vorgesehen sind.

Für eine Außerbetriebnahme der Vorrichtung 10 ist in der unteren Stirnseite 78.2 des Gehäuses 16 ein Ablassventil 88 vorgesehen.

Der Einsatz der Vorrichtung von Fig. 7 erfolgt in gleicher Weise wie bei Fig. 4, nämlich in Verbindung mit einer durchströmten Rohrleitung 34.2, bei der es sich in der Darstellung von Fig. 7 um eine Brunnenwasserförderleitung handelt, die ggf. durch eine Motorpumpe 90 gespeist wird. In der Rohrleitung 34.2 sind eine Rückschlagklappe 92, ein Durchflusszähler 94 und ein Absperrschieber 96 vorgesehen. Jedenfalls ist die Vorrichtung 10 an die Rohrleitung 34.2 nach Art eines Bypasses angeschlossen, wobei der Einlass 20 an eine Entnahme 36.2, und der Auslass 22 an eine Einspeisung 38.2 angeschlossen sind. Wie aus der Fig. 7 ersichtlich, ist die Entnahme 36.2 stromaufwärts von der Rückschlagklappe 92, wobei die Einspeisung 36.2 zwischen dem Durchflusszähler 94 und dem Absperrschieber 96 angeordnet ist.

In der Verbindungsleitung zwischen der Entnahme 36.2 und dem Einlass 20 ist ein Ventil 28.4 vorgesehen, das von der Steuerungseinrichtung 33 (in Fig. 7 zur Vereinfachung nicht gezeigt) geeignet gesteuert bzw. geregelt werden kann, um einen optimalen Volumenstrom einzustellen, mit dem die Messkammer 18 bei der Ausführungsform gemäß Fig. 7 von Wasser durchströmt wird.

Im Übrigen entspricht die Funktionsweise der Ausführungsform von Fig. 7 jener von Fig. 4, so dass zur Vermeidung von Wiederholungen auf die obigen Erläuterungen zu Fig. 4 verwiesen werden darf.

Fig. 8 zeigt eine weitere Ausführungsform für die Vorrichtung 10, nämlich in einer Schnittansicht. Gleiche Bauteile und Merkmale wie bei der Ausführungsform von Fig. 7 sind jeweils mit gleichen Bezugszeichen versehen, und zur Vermeidung von Wiederholungen nicht nochmals erläutert.

Bei der Ausführungsform von Fig. 8 ist das Trägermaterial in Form von Spänen oder anderem losen Material ausgebildet, das in einem Säckchen 13 aus offenporigem Material netzartigem Material aufgenommen ist. Im Messeinsatz der Vorrichtung 10 ist dieses Säckchen13 geeignet an der Halterung 74 angebracht, so dass das Wasser in der Zentralkammer 18.1 das Säckchen 13 durchströmt und dadurch eine Akkumulation der Zielsubstanz an den Spänen möglich ist. Um einen definierten Kontakt zwischen dem Wasserstrom und den Spänen zu gewährleisten, sind stets formgleiche Säckchen ggf. mit eingefügten Formstabilisatoren und gleichen Füllmengen zu verwenden.

Bezüglich der Vorrichtung 10 Ausführungsform von Fig. 8 versteht sich, dass diese in gleicher Weise wie bei Fig. 7 erläutert an eine Brunnenwasserförderleitung in Form der Rohrleitung 34.2 angeschlossen werden kann. In diesem Zusammenhang darf darauf hingewiesen werden, dass ein Durchströmen der Vorrichtung 10 gemäß der Ausführungsformen von Fig. 7 bzw. Fig. 8 mit Hilfe einer regelbaren Pumpe gewährleistet werden kann, falls in der Rohrleitung ein zu geringer Volumenstrom vorherrscht. Des Weiteren ist der Einsatz einer Vorrichtung gemäß Fig. 7 bzw. Fig. 8 auch an anderen Wasservorräten, analog zur Darstellung von Fig. 5, mit einer geeigneten Pumpe möglich, mittels der ein ausreichendes Durchströmen der Vorrichtung 10 gewährleistet wird.

Bezüglich aller obigen Ausführungsformen der erfindungsgemäßen Vorrichtung 10 darf darauf hingewiesen werden, dass deren Bestandteile aus Metall hergestellt sein können, und insoweit ausreichend stabil bzw. druckfest ausgebildet sind. Somit kann die Vorrichtung 10 auch größeren Innendrücken standhalten. Wenn die Anforderungen von Trinkwasserinstallationen einzuhalten sind, können die Bestandteile der Vorrichtung auch vollständig aus Edelstahl hergestellt sein. Alternativ hierzu ist auch eine Herstellung von Komponenten der erfindungsgemäßen Vorrichtung 10 auch aus Kunststoff möglich, z.B. aus HDPE, das eine ausreichend hohe Festigkeit aufweist.

## Patentansprüche

1. Vorrichtung (10) zum Bestimmen einer Konzentration zumindest eines Stoffes in einem flüssigen Medium, vorzugsweise Wasser, umfassend
ein Trägermaterial (12) mit einer Oberfläche (14), die für den zumindest einen Stoff akkumulationsfähig ist, derart, dass der Stoff an der Oberfläche (14) des Trägermaterials (12) akkumulierbar ist, wenn das flüssige Medium an dem Trägermaterial (12) vorbeiströmt oder das Trägermaterial (12) durchströmt,
ein Gehäuse (16) mit einer Durchfluss-Messkammer (18), an der ein Einlass (20) und ein Auslass (22) für das flüssige Medium vorgesehen sind, so dass die Messkammer (18) von dem flüssigen Medium durchströmbar ist,
**gekennzeichnet durch**
eine Anordnung des Trägermaterials (12) innerhalb der Messkammer (18), derart, dass sich innerhalb der Messkammer (18) im Bereich des Trägermaterials (12) ein vorbestimmter Strömungsquerschnitt (24) orthogonal zur Strömungsrichtung (26) des flüssigen Mediums bildet,
Mittel zum Einstellen (28) und Messen (29) eines vorbestimmten Volumenstroms, mit dem die Messkammer (18) von dem flüssigen Medium durchströmbar ist, wobei diese Mittel (28; 29) in das Gehäuse (16) integriert sind,
Speichermittel (30), mit denen die Daten bezüglich der Menge an flüssigem Medium, die die Messkammer (18) durchströmt hat, speicherbar sind, wobei die Speichermittel (30) in das Gehäuse (16) integriert sind, und
eine Energieversorgung (32), an die die Mittel (28) zum Einstellen/Messen eines vorbestimmten Volumenstroms und die Speichermittel (30) angeschlossen sind, wobei die Energieversorgung (32) in das Gehäuse (16) integriert ist und in Form von Batterien oder Akkumulatoren ausgebildet ist.

2. Vorrichtung (10) nach Anspruch 1, **dadurch gekennzeichnet, dass** die umströmbare Oberfläche (14) des Trägermaterials (12) und/oder der vorbestimmte Strömungsquerschnitt (24) innerhalb der Messkammer (18) von einer Formgebung des Trägermaterials (12) abhängig sind, wobei das Trägermaterial (12) flächig, röhrenförmig, fadenförmig oder kugelförmig ausgebildet ist.

3. Vorrichtung (10) nach Anspruch 1 oder 2, **dadurch gekennzeichnet, dass** der Einlass (20) der Messkammer (18) an eine Entnahme (36.1; 36.2) einer durchströmten Rohrleitung (34.1; 34.2), und der Auslass (22) der Messkammer (18) an eine Einspeisung (38.1; 38.2) der durchströmten Rohrleitung (34.1; 34.2) anschließbar sind, wobei die Mittel (28) zum Einstellen eines vorbestimmten Volumenstroms ein Ventil (28.1) umfassen, das entweder stromaufwärts des Einlasses (20) der Messkammer (18) oder stromabwärts des Auslasses (22) der Messkammer (18) angeordnet ist.

4. Vorrichtung (10) nach Anspruch 1 oder 2, **dadurch gekennzeichnet, dass** der Einlass (20) der Messkammer (18) an eine Entnahme (46) eines Wasservorrats (44) anschließbar ist, wobei die Mittel (28) zum Einstellen eines vorbestimmten Volumenstroms eine Pumpe (28.2) umfassen, die zwischen dem Einlass (20) der Messkammer (18) und dem Wasservorrat (44), oder zwischen dem Auslass (22) der Messkammer (18) und dem Wasservorrat (44), angeordnet ist, vorzugsweise, dass der Auslass (22) der Messkammer (18) an eine Rückführung (48) zum Wasservorrat (44), oder an eine Ableitung (52) anschließbar ist.

5. Vorrichtung (10) nach Anspruch 1 oder 2, **dadurch gekennzeichnet, dass** das Gehäuse (16) der Vorrichtung (10) in ein Filterrohr (56) einer Grundwassermessstelle (54) einsetzbar ist, derart, dass eine Strömung in dem Filterrohr (56) in einem Längenabschnitt, der einer Länge der Vorrichtung (10) entspricht, ausschließlich durch die Messkammer (18) der Vorrichtung (10) hindurch tritt, wobei die Mittel (28) zum Einstellen eines vorbestimmten Volumenstroms eine Pumpe (28.3) umfassen, die angrenzend zum Einlass (20) der Messkammer (18) oder angrenzend zum Auslass (22) der Messkammer (18) angeordnet ist.

6. Vorrichtung (10) nach Anspruch 5, **dadurch gekennzeichnet, dass** ein Stützrohr (62) vorgesehen ist, welches innerhalb des Filterrohrs (56) einpassbar ist, wobei das Gehäuse (16) der Vorrichtung (10) mittels des Stützrohrs (60) innerhalb des Filterrohrs (56) positionierbar ist, vorzugsweise, dass eine axiale Länge des Stützrohrs (62) zumindest mit einer axialen Länge der Messkammer (64) übereinstimmt oder größer als die axiale Länge der Messkammer (18) ist.

7. Vorrichtung (10) nach Anspruch 6, **dadurch gekennzeichnet, dass** das Stützrohr (62) entlang seiner Längsachse mehrteilig ausgebildet ist, wobei eine axiale Länge des Stützrohrs (62) durch Verwendung einer bestimmten Anzahl von Teilen variabel einstellbar ist.

8. Vorrichtung (10) nach Anspruch 6 oder 7, **dadurch gekennzeichnet, dass** das Stützrohr (62) an seiner Außenwandung (64) radial dicht ausgeführt ist, vorzugsweise, dass an der Außenwandung (64) des Stützrohrs (62) eine Dichtung (68) angeordnet ist.

9. Vorrichtung (10) nach einem der Ansprüche 1 bis 8, **dadurch gekennzeichnet, dass** die Messkammer (18) mehrteilig ausgebildet ist, wobei die Messkammer zumindest eine Zentralkammer (18.1) und eine der Zentralkammer (18.1) vorgelagerte Vorkammer (18.3) umfasst, wobei der Einlass (20) in die Vorkammer (18.2) mündet und der Auslass (22) an die Zentralkammer (18.1) angeschlossen ist, wobei die Kammern derart miteinander verbunden sind, dass die Strömungsrichtung (26) für das flüssige Medium bei einem Übergang zwischen der Vorkammer (18.2) und der Zentralkammer (18.1) um zumindest 90°, vorzugsweise um 180°, umgelenkt wird, vorzugsweise, dass die Vorkammer (18.2) und die Zentralkammer (18.1) derart angeordnet sind, dass eine Durchströmung der Messkammer mit dem flüssigen Medium in einer gemeinsamen Ebene stattfindet.

10. Vorrichtung (10) nach Anspruch 9, **dadurch gekennzeichnet, dass** die Messkammer auch eine der Zentralkammer (18.1) nachgelagerte Nachkammer (18.3) umfasst, wobei der Auslass (22) an die Nachkammer (18.3) angeschlossen ist, wobei die Kammern derart miteinander verbunden sind, dass die Strömungsrichtung (26) für das flüssige Medium bei einem Übergang zwischen der Zentralkammer (18.1) und der Nachkammer (18.3) jeweils um zumindest 90°, vorzugsweise um 180°, umgelenkt wird, wobei die Vorkammer (18.2), die Zentralkammer (18.1) und die Nachkammer (18.3) derart angeordnet sind, dass eine Durchströmung der Messkammer mit dem flüssigen Medium in einer gemeinsamen Ebene stattfindet.

11. Vorrichtung (10) nach einem der Ansprüche 1 bis 10, **dadurch gekennzeichnet, dass** die Messkammer (16) von Stirnseiten des Gehäuses (78) verschlossen wird, wobei die Stirnseiten des Gehäuses (78) abnehmbar sind, wobei die Messkammer (16) bei abgenommenen Gehäuse-Stirnseiten von außen zugänglich ist.

12. Vorrichtung (10) nach Anspruch 11, **dadurch gekennzeichnet, dass** an einer Innenfläche einer Stirnseite (80), die im montierten Zustand der Messkammer (16) zugewandt ist, eine Halterung (82) angebracht ist, an der das Trägermaterial (12) anbringbar ist.

13. Verfahren zum Bestimmen einer Konzentration eines Stoffes in einem flüssigen Medium, bei dem eine Vorrichtung (10) nach einem der Ansprüche 1 bis 12 eingesetzt wird, wobei vor dem Messeinsatz der Vorrichtung (10) für den zu untersuchenden Stoff und das gewählte Trägermaterial einmalig eine Kalibrierfunktion mit folgenden Schritten durchgeführt wird:
(i) Bereitstellen eines Trägermaterials (12) mit einer Oberfläche (14), die für den Stoff akkumulationsfähig ist, derart, dass der Stoff an der Oberfläche (14) des Trägermaterials (12) akkumulierbar ist, wenn das flüssige Medium an dem Trägermaterial (12) vorbeiströmt oder das Trägermaterial (12) durchströmt,
(ii) Bestimmen eines optimalen Volumenstroms des flüssigen Mediums für ein Vorbei- oder Durchströmen an dem bzw. durch das Trägermaterial (12) in aufeinanderfolgenden Messungen, nämlich durch Einstellen von unterschiedlich großen Volumenströmen für das flüssige Medium bei jeweils vorbestimmten Konzentrationen, mit denen der Stoff in dem flüssigen Medium enthalten ist, und mit jeweils vorbestimmten Einsatzdauern, wobei der Volumenstrom dann einen optimalen Wert annimmt, wenn für eine jeweils vorbestimmte Konzentration, mit welcher der Stoff in dem flüssigen Medium enthalten ist, und für eine vorbestimmte Einsatzdauer eine stetige Zunahme einer Akkumulation des Stoffs an der Oberfläche (14) des Trägermaterials (12) vorliegt, und
(iii) Bestimmen der Akkumulation des Stoffs an der Oberfläche (14) des Trägermaterials (12) mit jeweils unterschiedlichen Konzentrationen des Stoffs in dem flüssigen Medium und mit jeweils unterschiedlichen Einsatzdauern, unter Berücksichtigung des in Schritt (ii) ermittelten optimalen Volumenstroms, und
(iv) Generieren eines Datensatzes auf Grundlage des Schritts (iii), um damit eine Kalibrierfunktion zu erzeugen, so dass bei einer anschließenden Messung des flüssigen Mediums anhand der Akkumulation des Stoffes auf der Oberfläche (14) des Trägermaterials (12) ein Rückschluss auf eine Konzentration des Stoffes in dem flüssigen Medium möglich ist,
wobei die Konzentration im flüssigen Medium allein aus der Untersuchung der akkumulierten Stoffmenge auf dem Trägermaterial mit Bezug auf die in Schritt (iv) erzeugte Kalibrierfunktion sowie die erfassten Daten zum Volumenstrom im Messzeitraum bestimmt wird.
